# EUROPEAN PATENT APPLICATION

(11) **EP 4 494 535 A1**
(43) Date of publication of application: **22.01.2025**
(21) Application number: 24020235.8
(22) Date of filing: 11.07.2024
(51) Int. Cl.: A47J 43/046, B01F 27/091, A47J 27/00, B01F 27/82, B01F 27/85, B01F 35/53

(54) **A MIXING PAN FOR LARGE-SCALE FOOD PRODUCTION**

(30) Priority: 19.07.2023 CZ 20230275
(71) Applicant: Jipa CZ s.r.o., 50303 Smirice (CZ)
(72) Inventor: Pavlík, Jirí, 50303 Smirice (CZ)
(74) Representative: Skoda, Milan

(57) **Abstract**

A mixing pan for large-scale food production, which includes a mixing vessel (2), in the inner space of which (3) at least two stirrers (4) are arranged, where the mixing vessel (2) has an oval shape, and each of the stirrers (4) contains at least one driving arm (5) mounted on a shaft (6), and on each driving arm (5) at least one spatula (7) is arranged, which firmly presses against the flat bottom (8) of the mixing vessel (2), while the path (21) of movement of the spatula (7) intersects without collision the path (22) of movement of at least one other spatula (7) arranged on at least one other driving arm (5) of at least one other stirrer (4).

## Description

### Technical field

The invention relates to a mixing pan for large-scale food production, which contains a mixing vessel, in the inner space of which a stirrer is arranged.

### State of the Art

From known technology, a number of design solutions for food preparation equipment that use mixing for food preparation have long been known.

From the patent document CS272764, equipment is known, consisting of a bowl of circular cross-section, which is mounted so as to pivot around a base, below the bottom of the bowl, a tilting shaft is arranged horizontally. The device also includes a closable lid and concentrically rotating tools that are mounted on a tool shaft. The rotating tools are driven by a motor mounted on the bottom of the bowl under the tilting shaft and equipped with a switching device on the side of the machine. The switching device is housed in a switching box, which is designed to be a support for the bowl. The disadvantage of this device is that it can only prepare a small quantity of food.

Another patent document CZ 2000-1184 describes an electric appliance for preparation in kitchens, which contains a body forming a pedestal intended for fitting a working vessel. The device also includes a lid for closing the working vessel, and a means for securing the lid on the working vessel, mounted on the base. In the bottom of the working vessel, stirring means are arranged on a shaft, with the shaft being simultaneously housed in the lid for closing the work vessel and in the body in which the shaft is connected to the drive. The disadvantage of this device is that it can only prepare a small quantity of food.

A large-volume device for cooking food that can mix prepared food is known from patent document EP 1 273252 A1. This device includes a kettle, a closing lid of the upper opening of this kettle, and a mechanism for supporting and tilting the kettle. The device further comprises a second lid which is arranged between said closing lid and the internal space of the kettle, and which is further selectively removable from the upper opening, in which said second lid closes the upper opening and is provided with a number of small through holes. A shaft with a drive is placed in the bottom of the kettle, and mixing means are arranged on this shaft in the internal space of the kettle. This device can prepare a large quantity of food by just mixing it, but it cannot prepare a large quantity of food that requires a thinner layer in its preparation. A typical example is, for example, sautéing onions.

Another patent document FR2503556A1 describes a food cooking device which is self-cleaning and has an automatic mixing device arranged in a cylindrical cooking pan heated by a gas burner. The mixing device includes mixing and scraping arms, which are arranged inside the pan and are driven by an electric motor located below the burner. The only disadvantage of this device is the small surface area of the bottom of the pan, which allows the preparation of a limited quantity of sautéed food.

From the above-mentioned technology, it is clear that known devices have a number of disadvantages, while the biggest disadvantage appears to be that they have a smaller surface area on the bottom of the cooking vessel and therefore cannot prepare a large quantity of food that requires direct contact with the heated bottom of the cooking vessel during preparation.

The aim of the invention is the design of a device for the thermal preparation of food, which will enable the preparation of a large quantity of food that requires direct contact with the pan's bottom surface or is prepared in a thin layer.

### Principle of the Invention

The stated shortcomings are largely eliminated and the objectives of the invention are fulfilled by a mixing pan for large-scale food production, which contains a mixing vessel in the interior of which at least two stirrers are arranged, characterised by that, according to the invention, the mixing vessel has an approximately oval shape, and each of the stirrers contains at least one driving arm mounted on a shaft, and on each driving arm at least one spatula is arranged that presses firmly against the flat bottom of the mixing vessel, with the path of movement of the spatula intersecting without collision the path of movement of at least one other spatula arranged on at least one other driving arm of at least one other stirrer. The advantage is that the pan designed in this way has a small mechanical depth, which corresponds to the standard mechanical depth of equipment intended for large kitchen operations, while it has practically twice the working surface of the mixing vessel. A pan that would have the same working surface as a mixing vessel, when using one mixer, would have a significantly higher mechanical depth and it would not be possible to class it among standard kitchen equipment. It is also to advantage that there is no need for free space around the pan for service intervention. The pan can thus be placed directly against the wall. It is to great advantage if the spatula presses firmly against the flat bottom of the mixing vessel. Thanks to this, the spatula can easily remove from the bottom of the mixing vessel pieces of the the food being prepared which have baked on, for example, during sautéing. It is also advantageous that the adjacent spatula further helps when washing the container. Another advantage is that due to the fact that the paths of the spatulas located on the adjacent mixers intersect, the processed food is transferred from one part of the mixing vessel to the other part of the mixing vessel, with the processed food being perfectly mixed throughout its entire volume.

It is to advantage if the stirrer contains at least three driving arms mounted on the shaft. The advantage being that three driving arms is optimal, both from a structural point of view and especially from the point of view of the mixing function. The drive shafts may be driven by means of a gear, or belt, or chain, or gimbal, connected to the drive. Advantageously, both drive shafts share a single drive unit so that it is easy to maintain the same rotary speed of the mixers and thus avoiding their collision. Furthermore, one drive unit is advantageous for safety reasons. If a unit on a single shaft were to fail or become overloaded, the stirrers could collide.

It is also to advantage if at least one wedge is arranged inside the mixing vessel, along its axis between the stirrers, on its bottom. Since the entire surface of the bottom of the mixing vessel is heated, the use of a wedge is advantageous because it limits the area for food preparation to only that space reached by the spatula mounted in the extreme position on the driving arm, which prevents the food being processed from being baked on in places where the spatula cannot reach. However, in certain cases it may not be necessary to use a wedge.

In an advantageous embodiment, the wedge is removable. This is especially beneficial due to the ease of cleaning the mixing vessel after use.

To advantage, at least one spout is also arranged in the mixing vessel, in its upper part. The spout simplifies the pouring out of the processed food, after its processing is finished.

It is to advantage if the spout has edges that are equipped with a primary overflow collar. The use of a collar also significantly simplifies the process of pouring out the processed food. The overflow collar ensures that it is possible to pour out the vessel filled to its maximum capacity and that there is no overflow of food outside the spout.

This prevents food from running down the front surface of the vessel when pouring out.

Furthermore, it is to advantage if the mixing vessel has, in its upper part on the side on which the spout is arranged, secondary overflow collars arranged on the sides of the spout. These collars extended along the greater part of the pouring side further greatly simplify manipulation of the pan.

It is also to advantage if at least one waste opening is arranged at the bottom of the mixing vessel. The advantage is the simplification, increased speed and improvement of the quality of the cleaning of the mixing vessel. At the same time, a big advantage is that it is not necessary to install a floor drain in front of the mixing pan.

It is also advantageous if the pan also contains full-surface heating elements arranged within the casing of the bottom of the mixing vessel. Specifically, the advantage is the simple design, which enables uniform heating of the entire bottom of the mixing vessel.

To advantage, the shaft is stored in a housing that is inserted perpendicular to the bottom at the bottom of the mixing vessel, and if the shaft is directly or via a gearbox connected to the drive means. Again, this design is very simple, with the advantage of allowing the bottom of the mixing vessel to be easily cleaned. Furthermore, it is convenient for the easy replacement and disassembly of mixing tools.

The main advantage of the mixing pan according to the invention is that it has a small mechanical depth, while enabling the preparation of practically twice the quantity of food being prepared. Servicing the mixing vessel is also easier. It is to great advantage that the use of two stirrers enables better mixing of the processed food, especially when using the possibility of changing the rotation of the stirrers. It is not necessary to place the pan so as to stand alone in a space, but it can be placed against a wall. The pan is most advantageously connected to the waste pipes, so it is not necessary to install a floor drain.

### Overview of the Figures

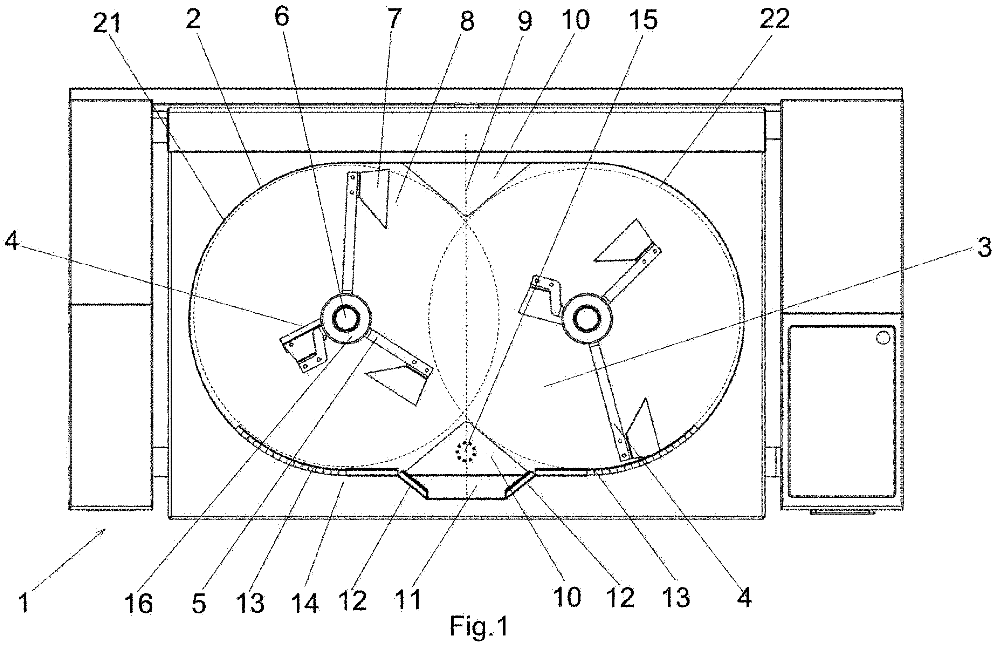

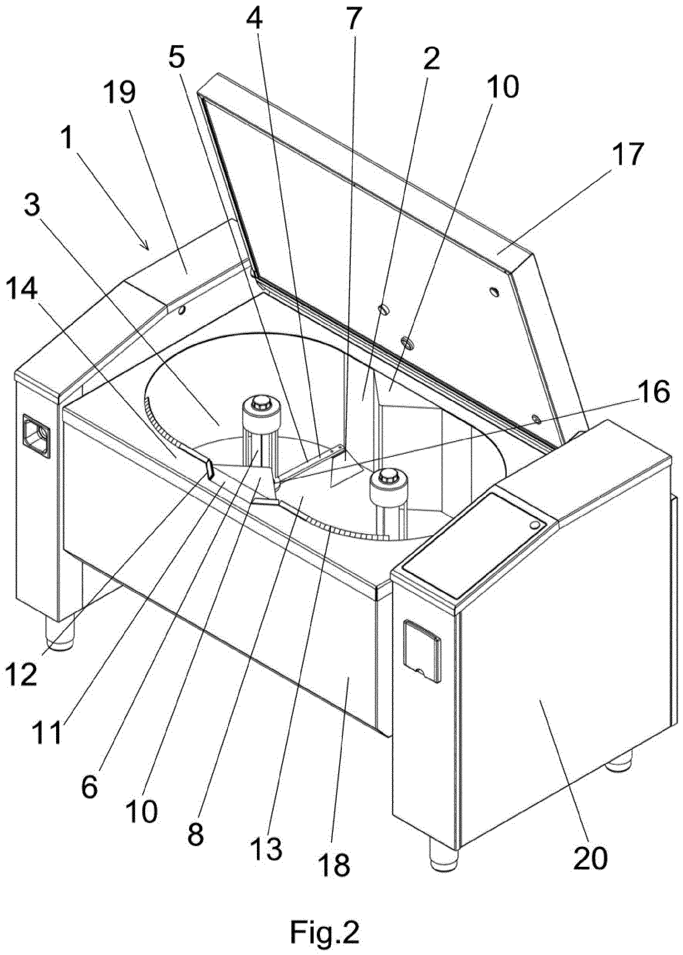

The invention will be further explained with the help of drawings, in which fig.1 shows a top view of the working part of the mixing pan and fig. 2 shows a frontal three-dimensional view of the entire mixing pan.

### Examples of the Performance of the Invention

A mixing pan 1 (fig. 1, fig. 2) for large-scale food production containing a mixing vessel 2, in the inner space 3 of which two stirrers 4 are arranged. The mixing vessel 2 has an approximately oval shape. In the mixing vessel 2, there may alternatively be more stirrers 4.

Each stirrer 4 contains three driving arms 5 mounted on a shaft 6.

On each driving arm 5 is arranged one spatula 7 which firmly presses against the flat bottom 8 of the mixing vessel 2. The path 21 of movement of the first spatula 7 arranged on the longest driving arm 5 of the first stirrer 4 intersects without collision the path 22 of movement of another spatula 7 arranged on the longest driving arm 5 of the second stirrer 4.

The shafts 6 are stored in housings 16, which are inserted into the bottom 8 of the mixing vessel 2. The shafts 6 are connected to the drive means via a gearbox.

In the mixing vessel 2, along its axis 9 between the stirrers 4, two removable wedges 10 are arranged, which are attached to the bottom 8 of the mixing vessel 2. Alternatively, the wedges 10 can be fixed on the bottom 8 of the mixing vessel 2.

In the mixing vessel 2 there is arranged, in its upper part 13, a spout 11, which has edges that are provided with a primary overflow collar 12.

The mixing vessel 2 has, in its upper part 14, on its side on which the spout 11 is arranged, on the sides of the spout 11 secondary overflow collars 13 arranged.

In the mixing vessel 2, at its bottom 8 a waste opening 15 is arranged.

The mixing pan 1 also contains non-illustrated full-surface heating elements, which are arranged within the casing of the bottom 8 of the mixing vessel 2.

The mixing vessel 2 is arranged in a tilt-able tub 18, which is rotatably mounted in the first sidewall 19 and in the second sidewall 20. On the upper side of the tilt-able tub **18**, a lid 17 is tilt-ably mounted, which allows the mixing vessel 2 to be closed.

### Industrial application

The pan, according to the invention, can be used as a mixing pan for large-scale thermal preparation of food in mass catering operations.

### List of Reference Marks

- 1: mixing pan
- 2: mixing vessel
- 3: inner space
- 4: stirrer
- 5: driving arm
- 6: shaft
- 7: spatula
- 8: bottom of the mixing vessel
- 9: axis
- 10: wedge
- 11: spout
- 12: primary overflow collar I
- 13: overflow collar II
- 14: upper part
- 15: waste opening
- 16: housing
- 17: lid
- 18: tilt-able tub
- 19: first sidewall
- 20: second sidewall
- 21: path of movement I
- 22: path of movement II

## Claims

1. A mixing pan for large-scale food production, which contains a mixing vessel (2), in the inner space (3) of which at least two stirrers (4) are arranged, **characterised by that** the mixing vessel (2) is oval in shape, and each of the stirrers (4) includes at least one driving arm (5) mounted on a shaft (6), and on each driving arm (5) at least one spatula (7) is arranged which firmly presses against the flat bottom (8) of the mixing vessel (2), with the path (21) of movement of the spatula (7) intersecting without collision the path (22) of movement of at least one other spatula (7) arranged on at least one other driving arm (5) of at least one other stirrer (4).

2. The pan according to claim 1, **characterised by that** the stirrer (4) comprises at least three driving arms (5) mounted on the shaft (6).

3. The pan, according to either one of claims 1 and 2, **characterised by that** in the mixing vessel (2) is, along its axis (9) between the stirrers (4), arranged at least one wedge (10).

4. The pan, according to claim 3, **characterised by that** the wedge (10) is removable.

5. The pan, according to any one of claims 1 to 4, **characterised by that** in the mixing vessel (2) in its upper part (13) at least one spout (11) is arranged.

6. The pan according to claim 5, **characterised by that** the spout (11) has edges which are provided with a primary overflow collar (12).

7. The pan, according to claim 5 or 6, **characterised by that** the mixing vessel (2) has in its upper part (14) on its side, on which the spout (11) is arranged, on the sides of the spout (11) arranged overflow collars (13).

8. The pan, according to any one of claims 1 to 7, **characterised by that** in the mixing vessel (2), at its bottom (8), at least one waste opening (15) is arranged.

9. The pan, according to any one of claims 1 to 8, **characterised by that** it further contains full-surface heating elements.

10. The pan, according to any one of claims 1 to 9, **characterised by that** the shaft (6) is stored in a housing (16) which is inserted into the bottom (8) of the mixing vessel (2).

11. The pan, according to any one of claims 1 to 10, **characterised by that** the shaft (6) is connected to the drive.
